# EUROPEAN PATENT SPECIFICATION

(11) **EP 1 252 807 B1**
(45) Date of publication and mention of the grant of the patent: **01.03.2006**
(21) Application number: 02009507.1
(22) Date of filing: 25.04.2002
(51) Int. Cl.: A01B 71/06

(54) **Hitch assembly for an agricultural machine**
Kuppelgestell für landwirtschaftliche Maschine
Assemblage d'accouplement pour machine agricole

(30) Priority: 27.04.2001 IT BO20010253
(43) Date of publication of application: 30.10.2002
(73) Proprietor: Bartolini Bruno, IT-06020 Gubbio Frazione Mocaiana (IT)
(72) Inventor: Bartolini Bruno, IT-06020 Gubbio Frazione Mocaiana (IT)
(74) Representative: Cerbaro, Elena

(56) References cited:
- EP-A- 0 568 854
- DE-A- 4 017 621
- DE-A- 4 132 889
- US-A- 4 071 105
- US-A- 4 763 743

## Description

The present invention relates to a hitch assembly for an agricultural machine.

In the agricultural vehicle industry, an agricultural machine is produced comprising a drive unit having at least one power take-off with an output shaft which rotates about a longitudinal axis; an operating unit having an input shaft with a hub; and a splined coupling for locking the output shaft angularly inside the hub.

The splined coupling comprises a number of teeth projecting outwards from the outer surface of the output shaft; and a number of cavities formed on the inner surface of the hub, and shaped and arranged so as each to receive a respective tooth when the output shaft is inserted axially inside the hub.

Known agricultural machines of the above type have the drawback of requiring, on the part of the user, a good deal of complicated, precise maneuvering to insert the output shaft inside the hub. That is, the hub must first be positioned coaxial with the output shaft; the output shaft and hub must then be rotated with respect to each other to position the teeth facing the respective cavities; and, finally, the output shaft must be inserted axially inside the hub.

The above procedure is made even more awkward by the fairly substantial weight of the input shaft, and by the shielding involved, which greatly impairs access to and maneuverability of the input and output shafts.

Document DE-4017621-A discloses an agricultural machine comprising a drive unit having at least one power take-off with an output shaft which rotates about a longitudinal axis; an operating unit having an input shaft with a hub; a splined coupling for locking the output shaft angularly inside the hub; and a hitch assembly comprising a guide fitted to the drive unit parallel to the axis of the output shaft and a slide fitted to the operating unit for keeping the input shaft in an operating position in which the input shaft is coaxial with the output shaft. The slide is engaged in rotary and axially fixed manner by the input shaft and is moved along the guide for moving the input shaft to and from a coupled position in which the input and output shafts are locked angularly to each other by means of the splined coupling.

It is an object of the present invention to provide a hitch assembly for an agricultural machine, designed to eliminate the aforementioned drawbacks.

According to the present invention, there is provided a hitch assembly for an agricultural machine, as claimed in Claim 1.

A non-limiting embodiment of the present invention will be described by way of example with reference to the accompanying drawings, in which:
Figure 1 shows a schematic view in perspective of an agricultural machine featuring a preferred embodiment of the hitch assembly according to the present invention;
Figures 2 and 3 show two side views, with parts in section and parts removed for clarity, of the hitch assembly according to the present invention in two different operating positions;
Figure 4 shows a side view of a first detail in Figures 2 and 3;
Figure 5 shows a longitudinal section of a second detail in Figures 2 and 3;
Figure 6 shows a partly sectioned side view of a third detail in Figures 2 and 3;
Figure 7 shows a side view of a fourth detail in Figures 2 and 3;
Figure 8 shows a cross section of a fifth detail in Figures 2 and 3;
Figure 9 shows a side view, with parts in section and parts removed for clarity, of a sixth detail of the hitch assembly according to the present invention.

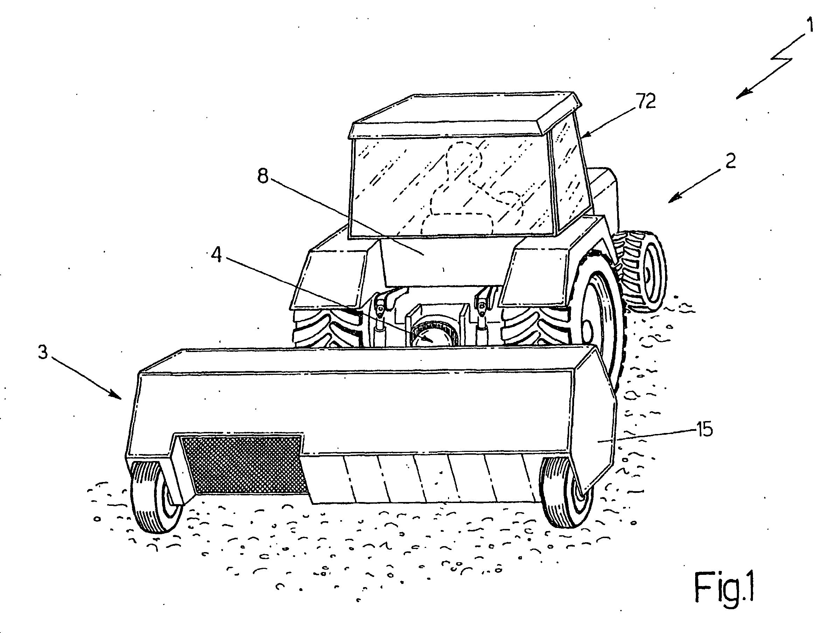

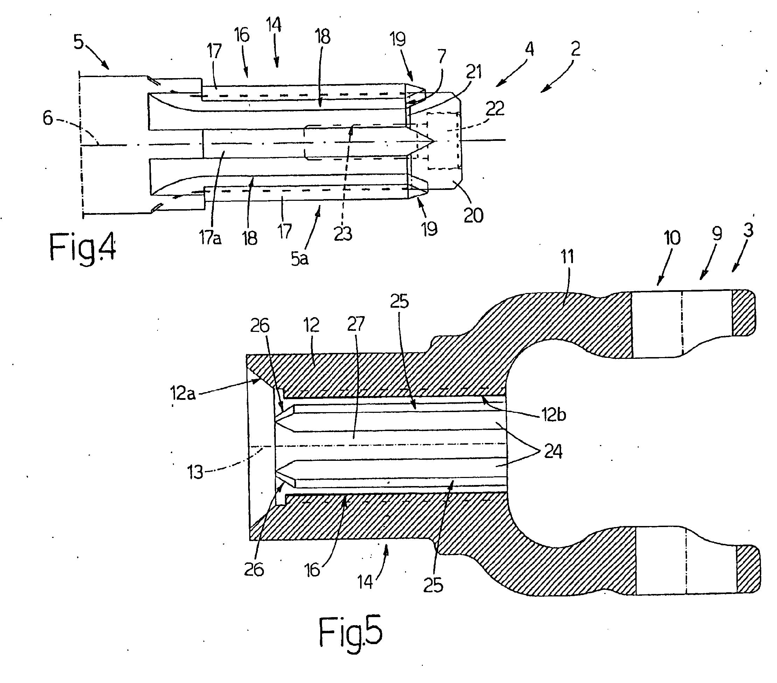

With reference to Figures 1 and 4, number 1 indicates as a whole an agricultural machine comprising a drive unit 2, and an operating unit 3 associated with unit 2. Unit 2 comprises a power take-off 4 having a powered output shaft 5, which has a longitudinal axis 6, comprises an end shank 5a defined axially by an end surface 7 substantially perpendicular to axis 6, and is mounted to rotate about axis 6 and with respect to a frame 8 of unit 2 by virtue of a known actuating device not shown.

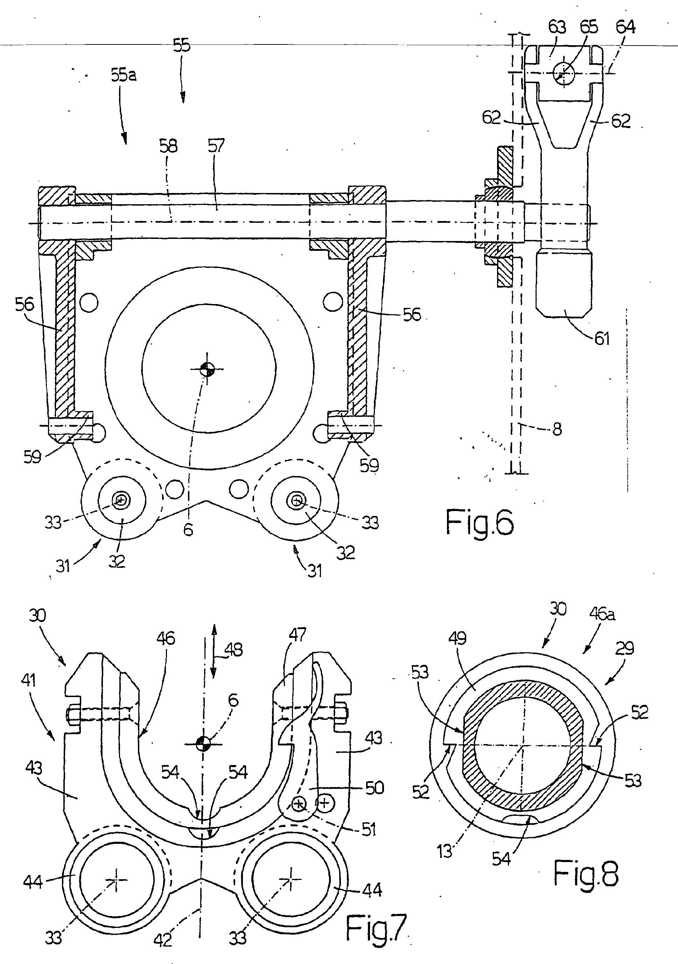

With reference to Figure 5, unit 3 comprises an input shaft 9 defined at least partly by a universal joint 10, a fork 11 of which has a hub 12 having a longitudinal axis 13 and defined internally by an inner surface comprising a substantially truncated-cone-shaped portion 12a, and a substantially cylindrical portion 12b. Hub 12 is connected to shaft 5 in axially and angularly fixed manner by a coupling device 14, and is rotated by shaft 5 about axis 13 and with respect to a frame 15 (Figure 1) of unit 3.

Device 14 comprises a splined coupling 16 in turn comprising a number of teeth 17 projecting outwards from an outer surface of shank 5a and equally spaced about axis 6. Each tooth 17 is defined laterally by two sides 18 extending substantially parallel to each other along part of the overall length of tooth 17, and has an end portion 19 where sides 18 project axially from surface 7 and converge with each other.

Portions 19 are equally spaced about a substantially cylindrical body 20, which projects axially with respect to portions 19, and is locked against surface 7, coaxially with axis 6 and with the interposition of a flat washer 21, by a screw 22 extending through body 20 and engaging a threaded hole 23, which is formed through shank 5a, coaxially with axis 6, and opens outwards at surface 7.

Coupling 16 also comprises a number of teeth 24, which are equal in number to teeth 17, are formed on portion 12b of the inner surface of hub 12, and are equally spaced about axis 13. Each tooth 24 is defined laterally by two sides 25 extending substantially parallel to each other along part of the overall length of tooth 24, and has an end portion 26 where sides 25 converge with each other.

Coupling 16 also comprises a number of cavities 27 alternating with teeth 24, and arranged and shaped so as each to receive a respective tooth 17 when shaft 5 is inserted axially inside hub 12. In connection with the above, it should be pointed out that portion 19 of each tooth 17 in one pair of diametrically opposite teeth 17 (hereinafter indicated 17a) is longer, measured parallel to axis 13, than portion 19 of each of the other teeth 17, also measured parallel to axis 13, so that axial insertion of shaft 5 inside hub 12 may at most be prevented by interference between the two teeth 17a and two teeth 24.

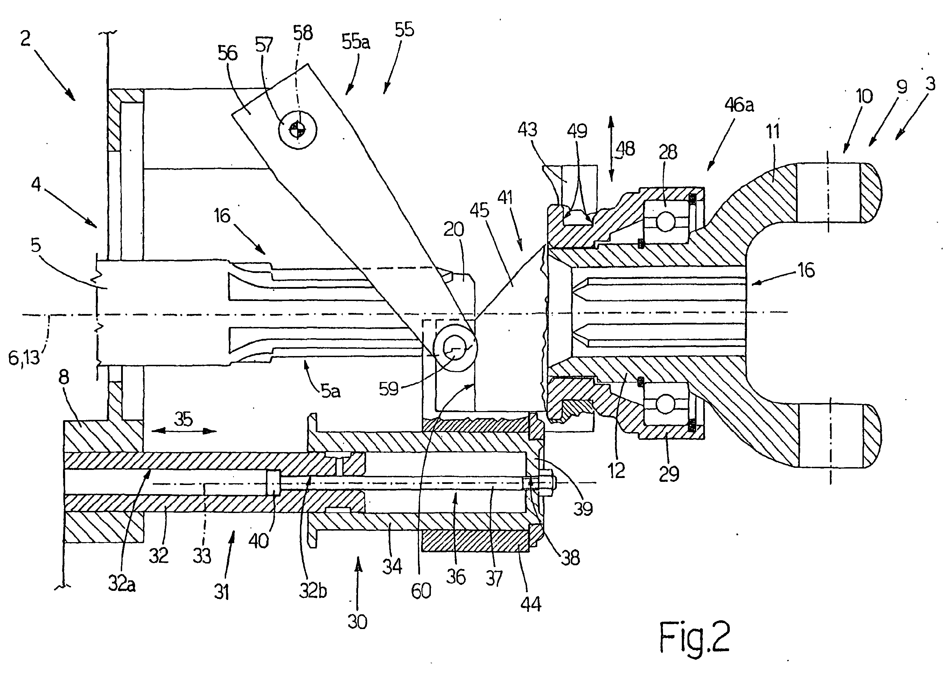

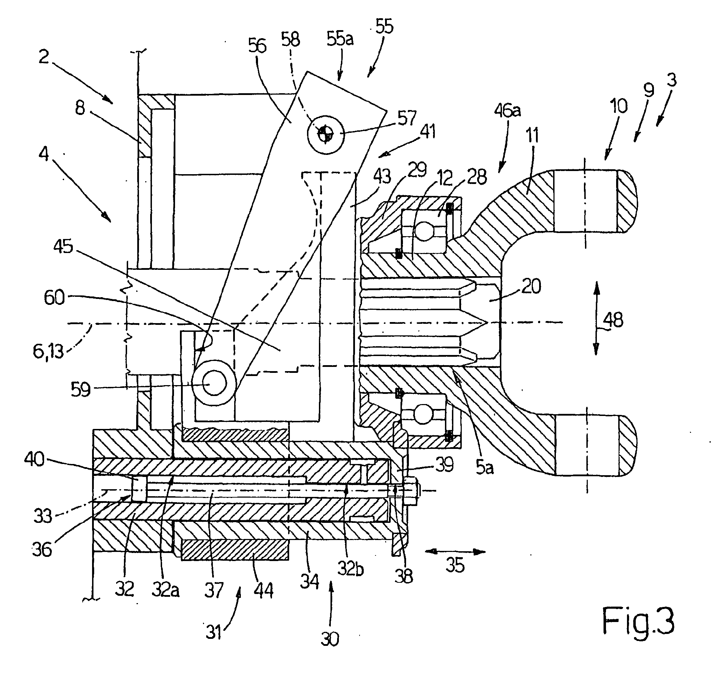

With reference to Figures 2 and 3, hub 12 engages, in rotary and axially fixed manner via the interposition of a ball bearing 28, a tubular body 29, which extends, coaxially with axis 13, about hub 12, and connects to a device 30 for supporting fork 11.

Device 30 comprises two guides 31 (only one shown in Figures 2 and 3) parallel to each other and to axis 6, and each comprising a sleeve 32, which extends through frame 8, has a longitudinal axis 33 parallel to axis 6, and comprises a wide portion 32a and a narrow portion 32b arranged in series along axis 33.

Each guide 31 also comprises a sleeve 34 fitted to respective sleeve 32 to slide linearly along respective sleeve 32 in a direction 35 parallel to axes 6 and 33. Sleeve 34 has a stop member defined by a pin 36; the shank 37 of pin 36 extends through portion 32b to engage a threaded hole 38 formed, coaxially with axis 33, through a flange 39 extending radially inwards from the inner surface of sleeve 34; and the head 40 of pin 36 is housed inside portion 32a, and cooperates with a free surface of portion 32b facing portion 32a.

With reference to Figure 7, device 30 also comprises a substantially fork-shaped slide 41 positioned crosswise to axis 6, extending about axis 6 and along an axis of symmetry 42 of its own perpendicular to axis 6, and comprising two arms 43 parallel to and on opposite sides of axis 42. Slide 41 also comprises two cylindrical hubs 44, which are located on opposite sides of axis 42, are each fixed to a respective arm 43 by a respective substantially flat plate 45 crosswise to respective arm 43, and are connected in sliding manner to sleeves 34 to permit linear displacement of slide 41 with respect to frame 8 and in direction 35.

The two arms 43 define a guide 46, which an assembly 46a, defined by fork 11 and by body 29, engages in sliding manner - possibly with the interposition of a fork-shaped adapter 47 fixed to arms 43 - so as to move, in a substantially vertical direction 48 parallel to axis 42, to and from an operating position (Figures 2 and 3) in which body 29 and, therefore, hub 12 are coaxial with axis 6. Adapter 47 provides for connecting forks 11 and, therefore, bodies 29 of different diameters to slide 41.

In the operating position, assembly 46a is locked:
axially in direction 35 by two annular flanges 49 (Figure 2), which extend radially outwards from the outer surface of body 29, and are separated by a distance, measured parallel to direction 35, approximately equal to but no smaller than the thickness of guide 46, also measured parallel to direction 35;
axially in direction 48 by a hook 50 (Figure 7) fitted to one of arms 43 to swing, about an axis 51 substantially parallel to direction 35 and to axis 6, between a release position (not shown) and a lock position, in which, by means of a spring (not shown), hook 50 engages a corresponding seat 52 (Figure 8) formed on one of flanges 49; and
angularly about axis 6 by means of two flat lateral surfaces 53 (Figure 8) substantially parallel to each other and to axis 42.

It should be pointed out that body 29, slide 41, and adapter 47 (if any) have respective recesses 54 (Figures 7 and 8) through which to dump soil normally deposited during operation of machine 1.

Displacement of slide 41 and, therefore, of hub 12 in direction 35 is controlled selectively by an actuating device 55 comprising a crank mechanism 55a, in turn comprising two cranks 56 (Figures 2, 3 and 6), which are connected in angularly fixed manner to a shaft 57 fitted in rotary manner through frame 8 to oscillate, with respect to frame 8, about a longitudinal axis 58 crosswise to axes 6 and 42, are located on opposite sides of axis 42, and each have a respective pin 59, which projects from the relative crank 56, parallel to axis 58 and towards the other crank 56, to engage a groove 60 formed, parallel to axis 42, along a lateral surface of one of plates 45.

With reference to Figure 6, crank mechanism 55a also comprises a substantially fork-shaped crank 61 fitted to shaft 57, and in turn comprising two parallel arms 62, and a bush 63, which extends between arms 62, is mounted to oscillate, with respect to arms 62, about an axis 64 substantially parallel to axis 58, and has a central hole 65 extending through bush 63 and perpendicular to axis 64.

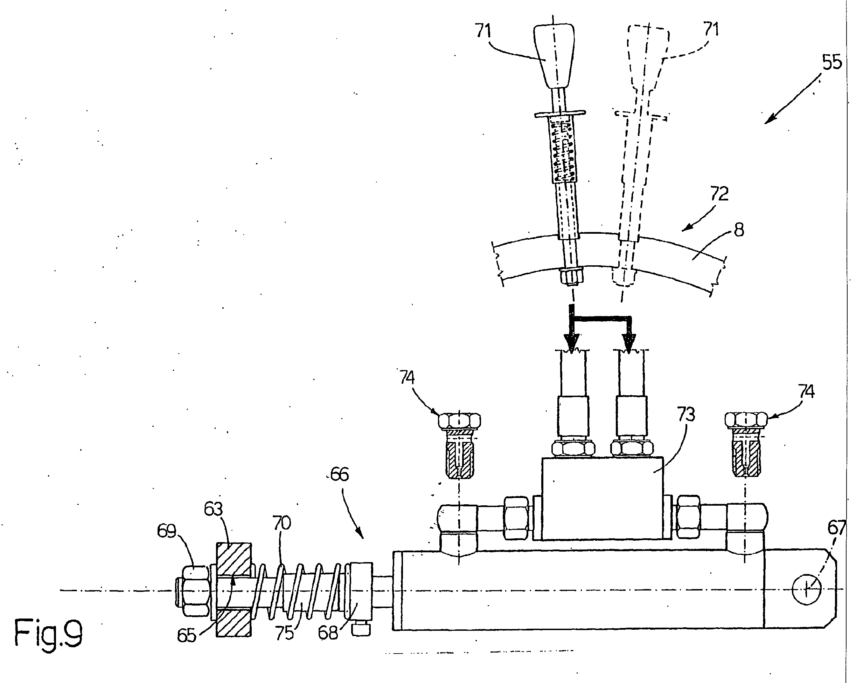

With reference to Figure 9, device 55 also comprises an actuating cylinder 66 - in the example shown, a hydraulic actuating cylinder 66, the free end of which is hinged to frame 8 to enable cylinder 66 to oscillate, with respect to frame 8, about an axis 67 substantially parallel to axes 58 and 64, and an output rod 68 of which engages in sliding manner hole 65 in bush 63, which is locked axially along rod 68 by a nut 69 engaging a threaded free end of rod 68, and by a spring 70 fitted to rod 68, on the opposite side of bush 63 to nut 69, and interposed between bush 63 and rod 68.

Cylinder 66 is operated by a control assembly comprising a known lever 71, which is installed inside the cab 72 of drive unit 2 (Figure 1) and provides for selectively moving rod 68 between an extracted position substantially outside cylinder 66, and a withdrawn position substantially inside cylinder 66; a known safety valve 73 interposed between lever 71 and cylinder 66 to keep rod 68 in the withdrawn or extracted position; and two known flow regulating devices 74 interposed between valve 73 and cylinder 66 to control oil supply to cylinder 66.

When rod 68 is moved from the withdrawn to the extracted position, the assembly defined by crank 61, shaft 57 and cranks 56 is oscillated by rod 68 about axis 58 (clockwise in Figures 2 and 3, in the case of cranks 56), so that slide 41 moves in direction 35, and assembly 46a moves into a coupled position (Figure 3), in which shank 5a is substantially inserted inside hub 12 with teeth 17 engaging respective cavities 27. Conversely, when rod 68 is moved from the extracted to the withdrawn position, the above assembly is oscillated by rod 68 about axis 58 (anticlockwise in Figures 2 and 3, in the case of cranks 56), so that assembly 46a moves into a rest position (Figure 2) in which shank 5a and teeth 17 are substantially withdrawn from hub 12 and cavities 27 respectively.

In a variation not shown, when assembly 46a is set to the coupled position, slide 41 may be locked axially in direction 35 by two hooks (not shown) located on opposite sides of slide 41 with respect to axis 6.

In actual use, the user first operates actuating cylinder 66 to set output rod 68 to the withdrawn position; then sets assembly 46a to the operating position (Figure 2); and, finally, operates cylinder 66 to move rod 68 into the extracted position, and assembly 46a into the coupled position (Figure 3).

At this point, insertion of teeth 17 inside respective cavities 27 is assisted by portions 19 and 26 of respective teeth 17 and 24, and by teeth 17a. In the event, when moving rod 68 from the withdrawn to the extracted position, the two teeth 17a contact two teeth 24, thus preventing slide 41 from moving in direction 35, and cranks 56 from oscillating about axis 58, rod 68 moves axially along hole 65 to compress spring 70 against bush 63.

At this point, when output shaft 5 of power take-off 4 is rotated, and teeth 17 are moved into a position facing respective cavities 27, spring 70 moves bush 63 along rod 68 and into contact with nut 69, thus oscillating crank 61 and cranks 56 about axis 58, and so inserting teeth 17 inside respective cavities 27.

In connection with the above, it should be pointed out that compression of spring 70 is limited by a cylindrical spacer 75 fitted to rod 68, coaxially with spring 70, and interposed between bush 63 and rod 68.

Actuating device 55 enables the user of agricultural machine 1 to lock assembly 46a in the rest position, e.g. when servicing operating unit 3 and/or driving machine 1 along roads, and so prevent accidental operation of output shaft 5 of power take-off 4 during such operations from also activating input shaft 9, thus seriously endangering the safety of the user.

In a variation not shown, slide 41 comprises a substantially tubular member connected in sliding manner to sleeves 34; and a second member connected to the first member in rotary and axially fixed manner, via the interposition of a ball bearing, and in the form of a fork defining guide 46 engaged in sliding manner by hub 12. One ball bearing may thus be integrated in slide 41 and used for various types of forks 11 and hubs 12.

## Claims

1. A hitch assembly for an agricultural machine, the hitch assembly comprising a drive unit (2) having at least one power take-off (4) having an output shaft (5) rotating about a first axis (6); an operating unit (3) having an input shaft (9) rotating about a second axis (13); and a splined coupling (16) for locking said input and output shafts (9, 5) angularly to each other; the hitch assembly comprising supporting means (30) fitted to said drive unit for keeping said input shaft (9) in an operating position in which the input shaft (9) is coaxial with said output shaft (5); and actuating means (55) for moving said input and output shafts (9, 5), with respect to each other, to and from a coupled position in which the input and output shafts (9, 5) are locked angularly to each other by means of said splined coupling (16); said supporting means (30) comprising first guide means (31) extending in a first direction (35) substantially parallel to said first axis (6), and a slide (41), which is mounted to slide along said first guide means (31), which slide is engaged in rotary and axially fixed manner by said input shaft (9), and is moved along the first guide means (31) by said actuating means (55); the hitch assembly being **characterized in that** said slide (41) comprises second guide means (46) extending in a second direction (48) substantially crosswise to said first direction (35); said input shaft (9) engaging said second guide means (46) in sliding manner to move in said second direction (48) to and from said operating position.

2. A hitch assembly as claimed in Claim 1, wherein said second guide means (46) are substantially in the form of a fork comprising two arms (43) substantially parallel to each other and to said second direction (48).

3. A hitch assembly as claimed in Claim 1 or 2, and also comprising locking means (49, 50, 53) for locking said input shaft (9) in said operating position; said locking means (49, 50, 53) comprising first locking means (49) for locking the input shaft (9) axially in said first direction (35), second locking means (50) for locking the input shaft (9) axially in said second direction (48), and third locking means (53) for locking the input shaft (9) angularly about said first axis (6).

4. A hitch assembly as claimed in any one of Claims 1 to 3, wherein said slide (41) comprises a first supporting member (41) mounted to slide along said first guide means (31); said second guide means (46) being connected in rotary and axially fixed manner to said first supporting member (41).

5. A hitch assembly as claimed in any one of Claims 1 to 3, and also comprising a second supporting member (29) engaged in rotary and axially fixed manner by said input shaft (9), and engaging in sliding manner said second guide means (46).

6. A hitch assembly as claimed in any one of Claims 1 to 5, wherein said actuating means (55) comprise a crank mechanism (55a), and an actuating device (66) for actuating the crank mechanism (55a); said slide (29, 41) being moved along said first guide means (31) by said crank mechanism (55a).

7. A hitch assembly as claimed in Claim 6, wherein said crank mechanism (55a) comprises at least one crank (56) mounted to rotate about a third axis (58); and said actuating device (66) comprises at least one actuating cylinder (66) having an output rod (68) connected in rotary manner to said crank (56) to oscillate, with respect to the crank (56), about a fourth axis (64) substantially parallel to said third axis (58).

8. A hitch assembly as claimed in Claim 7, wherein said output rod (68) is movable between an extracted position and a withdrawn position; said actuating means (55) also comprising safety valve means (73) for keeping the output rod (68) in said withdrawn position or said extracted position.

9. A hitch assembly as claimed in Claim 7 or 8, wherein said input and output shafts (9, 5) are provided one with a hub (12) and the other with a shank (5a) insertable inside said hub (12); said splined coupling (16) comprising a first number of teeth (17) arranged about said shank (5a), and a number of cavities (27) arranged about said hub (12) and each for receiving a respective said tooth (17) when said input and output shafts (9, 5) are moved into said coupled position; and said crank (56) being connected in sliding manner to said output rod (68) to adjust its position along the output rod (68) during the engagement of said cavities (27) by the respective said teeth (17).

10. A hitch assembly as claimed in Claim 9, wherein said actuating cylinder (66) also comprises elastic return means (70) for opposing the movement of said crank (56) along said output rod (68) during the engagement of said cavities (27) by the respective said teeth (17).

11. A hitch assembly as claimed in Claim 10, wherein said elastic return means (70) comprise at least one spring (70) coaxial with said output rod (68) and interposed between the output rod (68) and said crank (56).

12. A hitch assembly as claimed in any one of Claims 9 to 11, wherein said splined coupling (16) also comprises a second number of teeth (24) arranged about said hub (12); each tooth (17, 24) in said first and said second number of teeth (17, 24) being defined laterally by two sides (18, 25), and comprising an end portion (19, 26) where the relative said sides (18, 25) converge with each other.

13. A hitch assembly as claimed in Claim 12, wherein at least one tooth (17a) in at least said first or said second number of teeth (17, 24) projects axially with respect to the other teeth (17, 24) in the relative said first or second number of teeth (17, 24).

14. A hitch assembly as claimed in any one of Claims 1 to 13, and also comprising fourth locking means for locking said slide (29, 41) axially when said input and output shafts (9, 5) are in said coupled position.

15. An agricultural machine comprising a drive unit (2) having at least one power take-off (4) having an output shaft (5) rotating about a first axis (6); an operating unit (3) having an input shaft (9) rotating about a second axis (13); a splined coupling (16) for locking said input and output shafts (9, 5) angularly to each other; and a hitch assembly as claimed in any one of Claims 1 to 14.

## Patentansprüche

1. Kuppelgestell für eine landwirtschaftliche Maschine, bei welcher das Kuppelgestell umfasst: Eine Antriebseinheit (2), welche mindestens einen Kraftabtrieb (4) mit einer Ausgangswelle (5) aufweist, die um eine erste Achse (6) rotiert; eine Arbeitseinheit (3), welche eine Eingangswelle (9) aufweist, die um eine zweite Achse (13) rotiert; und eine Keilzahnkupplung (16), um die Eingangs- und Ausgangswelle (9, 5) winklig miteinander zu kuppeln; wobei das Kuppelgestell eine Stützeinrichtung (30) aufweist, die an der Antriebseinheit befestigt ist, um die Eingangswelle (9) in einer funktionellen Position zu halten, in welcher sich die Eingangswelle (9) koaxial zur Ausgangswelle (5) befindet; sowie eine Betätigungseinrichtung (55) zur Bewegung der Eingangs- und der Ausgangswelle (9, 5) in Bezug zueinander, in eine gekuppelte und aus einer gekuppelten Position, in welcher die Eingangs- und die Ausgangswelle (9, 5) mittels der Keilzahnkupplung (16) winklig miteinander gekuppelt sind; wobei die Stützeinrichtung (30) eine erste Führungseinrichtung (31) umfasst, die sich in einer ersten Richtung (35) erstreckt, welche im Wesentlichen parallel zur ersten Achse (6) verläuft, sowie eine Gleiteinrichtung (41), welche so angeordnet ist, dass sie entlang der ersten Führungseinrichtung (31) gleitet, und die Gleiteinrichtung sich mit der Eingangswelle (9) radial und axial in festem Eingriff befindet und durch die Betätigungseinrichtung (55) entlang der ersten Führungseinrichtung (31) bewegt wird; und das Kuppelgestell ist **dadurch gekennzeichnet, dass** die Gleiteinrichtung (41) eine zweite Führungseinrichtung (46) umfasst, die sich in einer zweiten Richtung (48) erstreckt, welche im Wesentlichen quer zur ersten Richtung (35) verläuft; wobei die Eingangswelle (9) mit der zweiten Führungseinrichtung (46) in verschieblichem Eingriff steht, um sich in der zweiten Richtung (48) in die Arbeitsposition und aus dieser heraus zu bewegen.

2. Kuppelgestell nach Anspruch 1, bei welchem die zweite Führungseinrichtung (46) im Wesentlichen die Form einer Gabel hat, welche zwei Arme (43) umfasst, die im Wesentlichen parallel zueinander und zu der zweiten Richtung (48) verlaufen.

3. Kuppelgestell nach Anspruch 1 oder 2, welche außerdem Rasteinrichtungen (49, 50, 53) zur Verrastung der Eingangswelle (9) in der Arbeitsposition umfasst; wobei die Rasteinrichtungen (49, 50, 53) eine erste Rasteinrichtung (49) zur axialen Verrastung der Eingangswelle (9) in der ersten Richtung (35), eine zweite Rasteinrichtung (50) zur axialen Verrastung der Eingangswelle (9) in der zweiten Richtung (48) und eine dritte Rasteinrichtung (53) zur rotatorischen Verrastung der Eingangswelle (9) um die erste Achse (6) aufweisen.

4. Kuppelgestell nach einem jeden der Ansprüche 1 bis 3, in welcher die Gleiteinrichtung (41) ein erstes Stützteil (41) umfasst, welches entlang der ersten Führungseinrichtung (31) verschieblich angeordnet ist; und die zweite Führungseinrichtung (46) in rotatorisch und axial fixierter Weise mit dem ersten Stützteil (41) verbunden ist.

5. Kuppelgestell nach einem jeden der Ansprüche 1 bis 3, welches außerdem ein zweites Stützteil (29) umfasst, das sich mit der Eingangswelle (9) in rotatorisch und axial fixierter Weise in Eingriff befindet und verschieblich mit der zweiten Führungseinrichtung (46) zusammenwirkt.

6. Kuppelgestell nach einem jeden der Ansprüche 1 bis 5, bei welchem die Betätigungseinrichtung (55) einen Kurbelmechanismus (55a) und eine Betätigungseinrichtung (66) zur Betätigung des Kurbelmechanismus (55a) umfasst; und die Gleiteinrichtung (29, 41) durch den Kurbelmechanismus (55a) entlang der ersten Führungseinrichtung (31) bewegt wird.

7. Kuppelgestell nach Anspruch 6, bei welchem der Kurbelmechanismus (55a) mindestens eine Kurbel (56) umfasst, die drehbar um eine dritte Achse (58) angeordnet ist; und die Betätigungseinrichtung (66) mindestens einen Betätigungszylinder (66) aufweist, der eine Ausgangsstange (68) besitzt, die drehbar mit der Kurbel (56) verbunden ist, um in Bezug zur Kurbel (56) um eine vierte Achse (64), die im Wesentlichen parallel zur dritten Achse (58) verläuft, zu schwingen.

8. Kuppelgestell nach Anspruch 7, bei welchem die Ausgangsstange (68) zwischen einer ausgefahrenen Position und einer zurückgezogenen Position bewegbar ist; und die Betätigungseinrichtung (55) zusätzlich eine Sicherheitsventileinrichtung (73) aufweist, um die Ausgangsstange (68) in der zurückgezogenen Position oder der ausgefahrenen Position zu halten.

9. Kuppelgestell nach Anspruch 7 oder 8, bei welchem die eine der Eingangs- und der Ausgangswelle (9, 5) mit einer Nabe (12) und die andere mit einem Schaft (5a), welcher in die Nabe (12) einführbar ist, versehen ist; und die Keilzahnkupplung (16) eine erste Anzahl von Zähnen (17) aufweist, welche um den Schaft (5a) angeordnet sind, sowie eine Anzahl von Ausnehmungen (27), welche um die Nabe (12) angeordnet sind, von denen jede zur Aufnahme eines entsprechenden Zahnes (17) vorgesehen ist, wenn die Eingangs- und die Ausgangswelle (9, 5) in die Kupplungsposition bewegt werden; und die Kurbel (56) in verschieblicher Weise mit der Ausgangsstange (68) verbunden ist, um deren Position entlang der Ausgangsstange (68) während des Eingriffes durch die jeweiligen Zähne (17) in die Ausnehmungen (27) zu justieren.

10. Kuppelgestell nach Anspruch 9, bei welchem der Betätigungszylinder (66) außerdem eine elastische Rücklaufeinrichtung (70) aufweist, um der Bewegung der Kurbel (56) entlang der Ausgangsstange (68) während des Eingriffs der jeweiligen Zähne (17) in die Ausnehmungen (27) entgegenzuwirken.

11. Kuppelgestell nach Anspruch 10, bei welchem die elastische Rücklaufeinrichtung (70) mindestens eine Feder (70) umfasst, die koaxial zur Ausgangsstange (68) angeordnet und zwischen der Ausgangsstange (68) und der Kurbel (56) zwischengefügt ist.

12. Kuppelgestell nach einem jeden der Ansprüche 9 bis 11, bei welchem die Keilzahnkupplung (16) außerdem eine zweite Anzahl von Zähnen (24) umfasst, die um die Nabe (12) angeordnet sind; wobei jeder Zahn (17, 24) von der ersten und der zweiten Anzahl von Zähnen (17, 24) durch zwei Seiten (18, 25) begrenzt wird und einen Endbereich (19, 26) aufweist, in welchem die zugehörigen Seiten (18, 25) miteinander konvergieren.

13. Kuppelgestell nach Anspruch 12, bei welchem mindestens ein Zahn (17a) in mindestens der ersten oder der zweiten Anzahl von Zähnen (17, 24) in Bezug zu den anderen Zähnen (17, 24) in der Gruppe der ersten oder zweiten Anzahl von Zähnen (17, 24) axial vorsteht.

14. Kuppelgestell nach einem jeden der Ansprüche 1 bis 13, welches außerdem eine vierte Rasteinrichtung aufweist, um die Gleiteinrichtung (29, 41) axial zu verrasten, wenn sich die Eingangs- und die Ausgangswelle (9, 5) in der gekuppelten Position befinden.

15. Landwirtschaftliche Maschine, umfassend eine Antriebseinheit (2), welche mindestens einen Kraftabtrieb (4) mit einer Ausgangswelle (5) aufweist, die um eine erste Achse (6) rotiert; eine Arbeitseinheit (3), welche eine Eingangswelle (9) aufweist, die um eine zweite Achse (13) rotiert; eine Keilzahnkupplung (16), um die Eingangs- und die Ausgangswelle (9, 5) winklig miteinander zu kuppeln; und ein Kuppelgestell nach einem jeden der Ansprüche 1 bis 14.

## Revendications

1. Ensemble d'attelage pour machine agricole, l'ensemble d'attelage comprenant une unité d'entraînement (2) ayant au moins une prise de force (4) ayant un arbre de sortie (5) effectuant une rotation autour d'un premier axe (6) ; une unité de fonctionnement (3) ayant un arbre d'entrée (9) effectuant une rotation autour d'un second axe (13) ; et un accouplement à cannelures (16) destiné à bloquer lesdits arbres d'entrée et de sortie (9, 5) de façon angulaire l'un par rapport à l'autre ; l'ensemble d'attelage comprenant des moyens de support (30) installés sur ladite unité d'entrainement afin de maintenir ledit arbre d'entrée (9) dans une position de fonctionnement dans laquelle l'arbre d'entrée (9) est coaxial par rapport audit arbre de sortie (5) ; et des moyens d'actionnement (55) destinés à déplacer lesdits arbres d'entrée et de sortie (9, 5) l'un par rapport à l'autre, vers et depuis une position d'accouplement dans laquelle les arbres d'entrée et de sortie (9, 5) sont bloqués de façon angulaire l'un par rapport à l'autre au moyen dudit accouplement à cannelures (16) ; lesdits moyens de support (30) comprenant des premiers moyens de guidage (31) s'étendant dans une première direction (35) sensiblement parallèle par rapport audit premier axe (6), et un coulisseau (41) monté de façon à coulisser le long desdits premiers moyens de guidage (31), lequel coulisseau est mis en prise de manière rotative et fixe axialement par ledit arbre d'entrée (9), et étant déplacé le long des premiers moyens de guidage (31) par lesdits moyens d'actionnement (55) ; l'ensemble d'attelage étant **caractérisé en ce que** ledit coulisseau (41) comprend des seconds moyens de guidage (46) s'étendant dans une seconde direction (48) sensiblement en diagonale par rapport à ladite première direction (35) ; ledit arbre d'entrée (9) se mettant en prise avec lesdits seconds moyens de guidage (46) de manière coulissante pour se déplacer dans ladite seconde direction (48) vers et depuis ladite position de fonctionnement.

2. Ensemble d'attelage selon la revendication 1, dans lequel lesdits seconds moyens de guidage (46) se présentent sensiblement sous la forme d'une fourche comprenant deux bras (43) sensiblement parallèles l'un par rapport à l'autre et par rapport à ladite seconde direction (48).

3. Ensemble d'attelage selon la revendication 1 ou 2, et comprenant également des moyens de blocage (49, 50, 53) destinés à bloquer ledit arbre d'entrée (9) dans ladite position de fonctionnement ; lesdits moyens de blocage (49, 50, 53) comprenant des premiers moyens de blocage (49) destinés à bloquer l'arbre d'entrée (9) axialement dans ladite première direction (35), des deuxièmes moyens de blocage (50) destinés à bloquer l'arbre d'entrée (9) axialement dans ladite seconde direction (48), et des troisièmes moyens de blocage (53) destinés à bloquer l'arbre d'entrée (9) angulairement autour dudit premier axe (6).

4. Ensemble d'attelage selon l'une quelconque des revendications 1 à 3, dans lequel ledit coulisseau (41) comprend un premier élément de support (41) monté de façon à coulisser le long desdits premiers moyens de guidage (31) ; lesdits seconds moyens de guidage (46) étant raccordés de manière rotative et fixés axialement audit premier élément de support (41).

5. Ensemble d'attelage selon l'une quelconque des revendications 1 à 3, et comprenant également un second élément de support (29) mis en prise de manière rotative et fixe axialement par ledit arbre d'entrée (9), et se mettant en prise de manière coulissante avec lesdits seconds moyens de guidage (46).

6. Ensemble d'attelage selon l'une quelconque des revendications 1 à 5, dans lequel lesdits moyens d'actionnement (55) comprennent un mécanisme (55a) à vilebrequin, et un dispositif d'actionnement (66) destiné à actionner le mécanisme (55a) à vilebrequin ; ledit coulisseau (29, 41) étant déplacé le long desdits premiers moyens de guidage (31) par ledit mécanisme (55a) à vilebrequin.

7. Ensemble d'attelage selon la revendication 6, dans lequel ledit mécanisme (55a) à vilebrequin comprend au moins un vilebrequin (56) monté de façon à effectuer une rotation autour d'un troisième axe (58) ; et ledit dispositif d'actionnement (66) comprend au moins un cylindre d'actionnement (66) ayant une barre de sortie (68) raccordée de manière rotative audit vilebrequin (56) pour osciller, par rapport au vilebrequin (56), autour d'un quatrième axe (64) sensiblement parallèle audit troisième axe (58).

8. Ensemble d'attelage selon la revendication 7, dans lequel ladite barre de sortie (68) est mobile entre une position extraite et une position rétractée ; lesdits moyens d'actionnement (55) comprenant également des moyens formant soupape de sûreté (73) destinés à maintenir la barre de sortie (68) dans ladite position rétractée ou ladite position extraite.

9. Ensemble d'attelage selon la revendication 7 ou 8, dans lequel lesdits arbres d'entrée et de sortie (9, 5) sont fournis l'un avec un moyeu (12) et l'autre avec une tige (5a) pouvant être insérée à l'intérieur dudit moyeu (12) ; ledit accouplement à cannelures (16) comprenant un premier nombre de dents (17) agencé autour de ladite tige (5a), et un certain nombre de cavités (27) agencé autour dudit moyeu (12) et chacune étant destinée à recevoir une respective parmi lesdites dents (17) lorsque lesdits arbres d'entrée et de sortie (9, 5) sont déplacés dans ladite position d'accouplement ; et ledit vilebrequin (56) étant raccordé de manière coulissante à ladite barre de sortie (68) pour ajuster sa position le long de la barre de sortie (68) au cours de la mise en prise desdites cavités (27) par lesdites dents respectives (17).

10. Ensemble d'attelage selon la revendication 9, dans lequel ledit cylindre d'actionnement (66) comprend également des moyens de retour élastiques (70) destinés à s'opposer au mouvement dudit vilebrequin (56) le long de ladite barre de sortie (68) au cours de la mise en prise desdites cavités (27) par lesdites dents respectives (17).

11. Ensemble d'attelage selon la revendication 10, dans lequel lesdits moyens de retour élastiques (70) comprennent au moins un ressort (70) coaxial avec ladite barre de sortie (68) et intercalé entre la barre de sortie (68) et ledit vilebrequin (56).

12. Ensemble d'attelage selon l'une quelconque des revendications 9 à 11, dans lequel ledit accouplement à cannelures (16) comprend également un second nombre de dents (24) agencé autour dudit moyeu (12) ; chaque dent (17, 24) dans ledit premier et ledit second nombre de dents (17, 24) étant définie latéralement par deux côtés (18, 25) et comprenant une partie d'extrémité (19, 26) où lesdits côtés relatifs (18, 25) convergent l'un vers l'autre.

13. Ensemble d'attelage selon la revendication 12, dans lequel au moins une dent (17a) dans au moins ledit premier ou ledit second nombre de dents (17, 24) fait saillie axialement par rapport aux autres dents (17, 24) dans lesdits premier ou second nombres relatifs de dents (17, 24).

14. Ensemble d'attelage selon l'une quelconque des revendications 1 à 13, et comprenant également des quatrièmes moyens de blocage destinés à bloquer ledit coulisseau (29, 41) axialement lorsque lesdits arbres d'entrée et de sortie (9, 5) sont dans ladite position d'accouplement.

15. Machine agricole comprenant une unité d'entraînement (2) ayant au moins une prise de force (4) ayant un arbre de sortie (5) effectuant une rotation autour d'un premier axe (6) ; une unité de fonctionnement (3) ayant un arbre d'entrée (9) effectuant une rotation autour d'un second axe (13) ; un accouplement à cannelures (16) destiné à bloquer lesdits arbres d'entrée et sortie (9, 5) angulairement l'un par rapport à l'autre, et un ensemble d'attelage selon l'une quelconque des revendications 1 à 14.
